# EUROPÄISCHE PATENTSCHRIFT

(11) **EP 3 025 127 B1**
(45) Veröffentlichungstag und Bekanntmachung des Hinweises auf die Patenterteilung: **27.01.2021**
(21) Anmeldenummer: 14738791.4
(22) Anmeldetag: 07.07.2014
(51) Int. Cl.: G01F 1/58, F16L 57/06, F16L 58/10

(54) **DURCHFLUSSMESSGERÄT**
FLOWMETER
DÉBITMÈTRE

(30) Priorität: 24.07.2013 DE 102013107895
(43) Veröffentlichungstag der Anmeldung: 01.06.2016
(73) Patentinhaber: Endress+Hauser Flowtec AG, 4153 Reinach (BL) (CH)
(72) Erfinder: SCHOOHF, Michael, CH-4105 Biel-Benken (CH)
(74) Vertreter: Andres, Angelika Maria
(86) Internationale Anmeldenummer: PCT/EP2014/064453
(87) Internationale Veröffentlichungsnummer: WO 2015/010882

(56) Entgegenhaltungen:
- EP-A1- 0 724 138
- WO-A1-2009/019105
- DE-A1- 3 244 473
- US-A- 3 750 468
- US-A- 4 517 846
- US-A1- 2007 251 578
- US-A1- 2008 174 110

## Beschreibung

Die vorliegende Erfindung betrifft ein Durchflussmessgerät nach dem Oberbegriff des Anspruchs 1.

Es sind Durchflussmessgeräte mit Messrohren bekannt, welche jeweils ein Außenrohr aus metallischem Stützmaterial aufweisen, welches mit einer ersten Materiallage aus einem korrosionsfesten und diffusionsdichten Kunststoffmaterial, dem sogenannten Liner, ausgerüstet ist. Dieses Material schützt das Außenrohr zuverlässig vor aggressiven Medien.

Problematisch bei den üblichen in Durchflussmessgeräten eingesetzten Linermaterialien ist, dass sie eine schlechte Volumenkonstanz aufweisen und nicht abrasionsfest sind. Durch die Verformung und den Abrieb, also bei mechanischer Belastung des Linermaterials durch das Messmedium treten Messfehler bei der Durchflussermittlung auf.

Es ist somit Aufgabe der vorliegenden Erfindung eine genauere Durchflussmessung zu gewährleisten.

Die vorliegende Erfindung löst diese Aufgabe durch ein Durchflussmessgerät mit den Merkmalen des Anspruchs 1.

Ein erfindungsgemäßes Durchflussmessgerät umfasst ein Messrohr mit einer Sensoranordnung und eine Auswerteeinheit zur Ermittlung einer Durchflussgeschwindigkeit, eines Volumendurchflusses und/oder eines Massendurchflusses, wobei die Sensoranordnung an oder in einem Messrohr angeordnet ist, welches Messrohr:
eine Messrohrwandung aus einem metallischen Stützmaterial und eine erste Materiallage zum Schutz des metallischen Stützmaterials vor korrosiven Messmedien, welche an einer Innenmantelfläche der Messrohrwandung angebracht ist, aufweist, wobei im Messrohr an der mediumszugewandten Seite der ersten Materiallage eine zweite Materiallage angeordnet ist, zur Verminderung der mechanischen Belastung, wobei die zweite Materiallage eine größere Härte aufweist als die erste Materiallage.

Die zweite Materiallage schützt das Messrohr vor mechanischen Belastungen durch das Messmedium. Dies können z.B. Druckbelastungen oder abrasive Belastungen sein.

Vorteilhafte Ausgestaltungen der Erfindung sind Gegenstand der Unteransprüche. Es ist von Vorteil, wenn die zweite Materiallage zu mehr als 90 Gew.% aus einem Material besteht, ausgesucht aus folgenden Stoffen:
Keramik, Keramikverbundstoff, Cermets, Ormocer-Beschichtungen, Glas, Polymerwerkstoffe, insbesondere aus Aluminiumoxid und/oder Zirkonoxid und/oder einem hartstoffhaltigen Verbundwerkstoff.

Diese Stoffe weisen zusätzlich zur besonders hohen Härte auch eine vergleichsweise gute chemische Beständigkeit auf.

Hartstoffe sind vergleichsweise schwer in einem Formstück herzustellen. Daher empfiehlt sich eine Anbindungsmatrix für die Hartstoffpartikel. Der hartstoffhaltige Verbundwerkstoff kann vorteilhaft als ein Keramikverbundwerkstoff ausgebildet sein, wobei der Hartstoff vorzugsweise ein oxidischer oder nitridischer Hartstoff ist. Idealerweise weist die erste Materiallage eine hohe Diffusionsdichte auf. Es ist daher von Vorteil, dass die erste Materiallage erfindungsgemäss aus einem Kunststoffmaterial auf Basis eines polyfluorierten Polymers und/oder eines natürlicher oder synthetischer Kautschuks, vorzugsweise PFA und/oder PTFE und/oder Vinylkautschuk besteht.

Die Härte der zweiten Materiallage ist erfindungsgemäss größer als die Härte der ersten Materiallage. Die Vickershärte der zweiten Materiallage ist besonders bevorzugt zumindest doppelt, ganz besonders bevorzugt zumindest fünfmal höher ist als die Vickershärte der ersten Materiallage.

Um eine Austauschbarkeit einerseits und geringe Rohrleitungskräfte auf die zweite Materiallage andererseits zu ermöglichen, ist die zweite Materiallage erfindungsgemäss als ein Keramikrohr ausgebildet, welches lose im Messrohr angeordnet ist.

Gegen die besagten Rohrleitungskräfte ist die zweite Materiallage lose im Messrohr angeordnet und wird vorteilhaft gegen Verrutschen entlang einer Messrohrachse im Messrohr mittels Haltescheiben gesichert, welche endständig am Messrohr angeordnet sind.

Die Haltescheiben bestehen vorteilhaft aus einem korrosionsbeständigen Nickelwerkstoff.

Die zweite Materiallage kann vorteilhaft endständige Ausnehmungen aufweisen, gegen welche die Haltescheiben gepresst werden können, wobei die Ausnehmungen derart ausgebildet sind, dass die Haltescheiben randseitig in Richtung des Messmediums von der zweiten Materiallage bedeckt ist. Dadurch werden die Haltescheiben seitlich vor mechanischen Belastungen und ggf. auch vor Abrasion geschützt.

Die zweite Materiallage im Messrohr ist erfindungsgemäss austauschbar, so dass bei Beschädigung der Materiallage nicht das gesamte Gerät, sondern lediglich diese Lage ausgewechselt werden kann.

Es ist von Vorteil, wenn die zweite Materiallage endständig konisch ausgebildet ist, derart, dass Innendurchmesser in einem Mittelbereich des Messrohres geringer ist als der Innendurchmesser in einem Endbereich des Messrohres.

Erfindungsgemäss weist die erste Materiallage keine adhäsive Bindung zum metallischen Stützmaterial auf. Die zweite Materiallage ist so ausgebildet, dass sie die erste Materiallage bei Unterdruck im Messrohr abstützt, so dass sich die erste Materiallage nicht in den Innenraum des Rohres ablöst.

Besonders Vorteilhaft findet die Erfindung in einem magnetisch-induktivem Durchflussmessgerät Anwendung. Ein solches Durchflussmessgerät umfassend ein Magnetsystem zum Aufbau eines Magnetfeldes welches das im Messrohr befindliche Messmedium durchsetzt und von zumindest zwei Messelektroden zum Abgriff einer durch die Bewegung des Messmediums induzierten Spannung, wobei die erste und die zweite Materiallage jeweils aus elektrisch-isolierendem Material bestehen und wobei in den jeweiligen Materiallagen Öffnungen für die Messelektroden vorgesehen sind.

Es ist von Vorteil, wenn zumindest die Elektrodenköpfe aus einem Material bestehen, welches zumindest die gleiche Härte oder eine größere Härte aufweist als die zweite Materiallage. Dadurch widerstehen die Elektrodenköpfe den meisten abrasiven Medien.

Falls es doch zu einem Abrieb der Elektrodenköpfe kommt, so können die Messelektroden vorteilhaft Elektrodenköpfe aufweisen, welche demontierbar sind.

Der Gegenstand der Erfindung wird nachfolgend anhand mehrerer Ausführungsbeispiel und unter Zuhilfenahme der beigefügten Zeichnungen näher beschrieben. Es zeigen:
Fig. 1 Schnittansicht eines Messrohres eines ersten erfindungsgemäßen Durchflussmessgerätes, welches als magnetisch-induktives Durchflussmessgerät ausgebildet ist;
Fig. 2 Schnittansicht eines Messrohres eines zweiten erfindungsgemäßen Durchflussmessgerätes, welches als magnetisch-induktives Durchflussmessgerät ausgebildet ist;
Fig. 3 Schnittansicht eines Messrohres eines dritten erfindungsgemäßen Durchflussmessgerätes, welches als magnetisch-induktives Durchflussmessgerät ausgebildet ist; und
Fig. 4 Schnittansicht eines Messrohres eines vierten Durchflussmessgerätes, welches als magnetisch-induktives Durchflussmessgerät ausgebildet ist. Das in Fig. 4 gezeigte Messrohr ist nicht Teil der Erfindung.

In der Automatisierungstechnik, insbesondere in der Prozessautomatisierungstechnik werden vielfach Durchflussmessgeräte eingesetzt, die zur Erfassung und/oder Beeinflussung von Prozessvariablen dienen. Eine Vielzahl solcher Durchflussmessgeräte wird von der Firma Endress + Hauser hergestellt und vertrieben. Durchflussmessgeräte sind dabei insbesondere Coriolis-, Ultraschall-, Vortex-, thermischen und/oder magnetisch induktiven Durchflussmessgeräte.

Üblicherweise wird in vielen der vorgenannten Durchflussmessgeräte Messrohre eingesetzt, welche zumindest in den mediumsberührenden Bereichen des jeweiligen Messrohres mit einem sogenannten Liner ausgekleidet sind. Dieser verhindert beispielsweise die Korrosion eines metallischen Stützrohres, wirkt u.a. auch als elektrisch isolierend und vermindert die Tendenz zur Verkeimung im Messrohr

Die vorgenannten Durchflussmessgeräte verfügen jeweils über zumindest ein Messrohr sowie einen oder mehrere Sensoren zur Ermittlung einer durchflussbezogenen Messgröße und eine Auswerteeinheit zur Ermittlung der Durchflussgeschwindigkeit, des Volumen- und/oder des Massedurchflusses eines Messmediums, welches durch das Messrohr fließt.

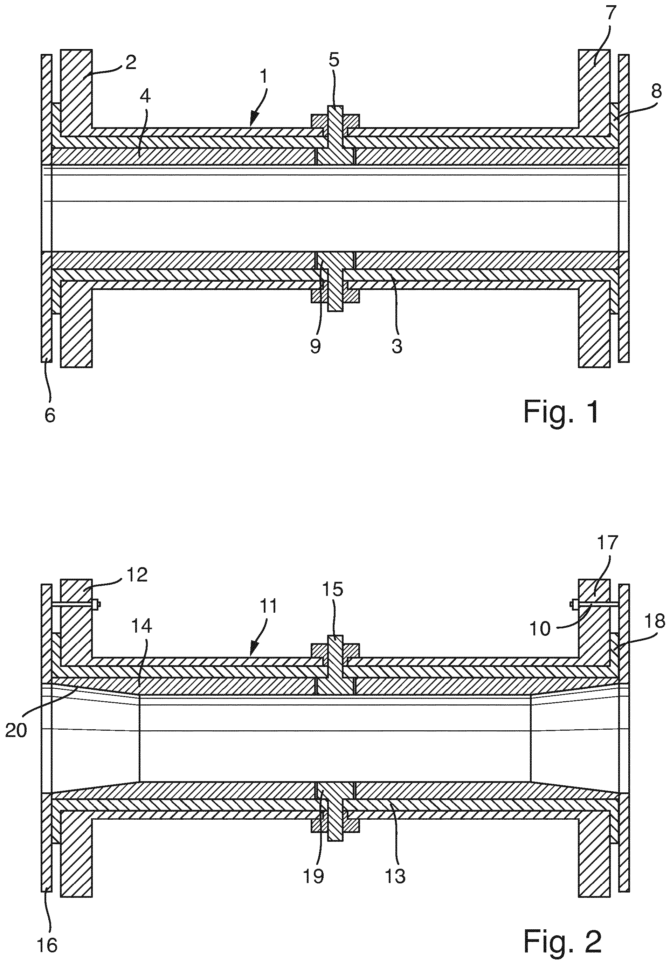

Exemplarisch für die vorgenannten Durchflussmessgeräte wurden in Fig. 1-4 verschiedene Messrohrvarianten von magnetisch-induktiven Messgeräten dargestellt.

Das Prinzip einer magnetisch-induktiven Durchflussmessung soll nachfolgend näher erläutert werden. Der Aufbau und das Messprinzip eines magnetisch-induktiven Durchflussmessgerätes sind dem Fachmann hinlänglich bekannt. Gemäß dem Faraday'schen Induktionsgesetz wird in einem Leiter, der sich in einem Magnetfeld bewegt, beispielsweise einem leitfähigen fluiden Messmedium, eine Spannung induziert. Ein Magnetfeld B mit konstanter Stärke wird durch ein Magnetsystem beispielsweise aus zwei Feldspulen zu beiden Seiten des Messrohres erzeugt. Senkrecht dazu befinden sich an der Rohrinnenwand des Messrohres zwei oder mehr Messelektroden, welche die beim Durchfließen des Messstoffes erzeugte Spannung abgreifen. Die induzierte Spannung verhält sich proportional zur Durchflussgeschwindigkeit v und damit zum Volumendurchfluss des Messmediums.

Die vorliegende Erfindung betrifft den Aufbau eines Messrohres eines Durchflussmessgerätes, respektive eines magnetisch-induktiven Durchflussmessgerätes. Das Magnetsystem und die Auswerteeinheit wurden daher in Fig. 1-4 aus Übersichtlichkeitsgründen nicht dargestellt.

Fig. 1 zeigt ein Messrohr 1 mit einem Außenrohr aus einem metallischen Stützmaterial 2. Dieses Außenrohr weist endständig jeweils einen Flansch 7 auf zur Anbindung des Messrohres 1 an eine Prozessleitung. Innerhalb des Messrohres ist eine erste Materiallage zum Schutz des metallischen Stützmaterials vor korrosiven Messmedien angeordnet. Diese Materiallage besteht vorzugsweise aus einem Kunststoffmaterial. Die erste Materiallage ist nicht nur korrosionsbeständig, sondern dichtet das metallische Stützmaterial derart ab, dass kein Messmedium zum metallischen Stützmaterial vordringen kann. Es ist somit diffusionsdicht. Bevorzugte Materialien für die erste Materiallage sind polyfluorierte Polymere wie z.B. PFA oder PTFE oder Kautschukderivate von natürlichem oder synthetischem Kautschuk. Diese Materialien haben u.a. den Vorteil einer hohen Dichtwirkung und einer hohen chemischen Resistenz gegenüber korrosiven Medien. Sie sind elektrisch-isolierend, was insbesondere für magnetisch-induktive Durchflussmessgeräte ein großer Vorteil ist.

Die Anbindung der ersten Materiallage erfolgt bei Kautschuk durch Anvulkanisieren und bei polyfluorierten Kunststoffen fast ausschließlich mechanisch. Hierfür wird die erste Materiallage 3 endständig gebördelt. Die Bördelung 8 der ersten Material 2 ist in Fig. 1 entsprechend dargestellt. Aufgrund der schlechten adhesiven Wechselwirkungen der ersten Materiallage zum metallischen Stützkörper, insbesondere im Fall von polyfluorierten Kunststoffen, wird die Verbindung des ersten Materials zum Stützkörper durch die endständigen Bördelungen 8 erreicht. Problematisch ist allerdings, dass der Liner sich bei Vakuum bzw. Unterdruck zum Messrohrinneren orientiert und sich von dem Stützmaterial ablösen kann.

Das Material der ersten Materiallage 3, respektive PFA, PFA und Kautschuk, insbesondere Vinylkautschuk, weisen geringe Vickershärten auf. Dadurch können sand- oder steinbeladene Messmedien die erste Materiallage 3 abrasiv angreifen und zerstören. Andererseits haben gerade polyfluorierte Polymere eine hervorragende chemische Beständigkeit gegenüber den meisten bekannten chemischen Substanzen und bilden zugleich ähnlich wie Gummi eine gute Diffusionsbarriere. Dadurch wird das metallische Stützmaterial optimal vor dem Medium geschützt.

Um diese Abrasion der ersten Materiallage zu vermeiden, weist das erfindungsgemäße Durchflussmessgerät im Messrohr 1 eine zweite Materiallage 4 auf. Diese Materiallage 4 besteht aus einem härteren Material oder Materialgemisch als die erste Materiallage 3. Dadurch können entsprechende abrasive Medien wie z.B. im Oel und Gasbereich Anwendung finden wie z.B. Frackingzusammensetzungen aus Wasser und Sand (beispielsweise bei Shale Gas Gewinnung), Wasser/Abwasser mit oder ohne Partikel, säurehaltige fluide Medien, partikelbeladene fluide Medien, insbesondere sandbeladene fluide Medien, ggf. auch dieseloelhaltige leitfähige Medien gemessen werden

Es kann eine hochgenaue Messung unter besonderen Messbedingungen erfolgen, wie z.B. unter periodischem Vakuum im Messrohr, extremen chemischen Angriff durch das Messmedium, schleifende Abrasion oder aber, insbesondere bei Durchflussmessgeräten die nicht als magnetisch-induktives Durchflussmessgerät ausgebildet sind, mit oelhaltigen Medien als Messmedium.

Bei der besagten Härte handelt es sich um die Vickershärte der jeweiligen Materialien der Materiallagen. Diese kann gemäß der Norm nach DIN EN ISO 6507-1:2005 bis - 4:2005ermittelt werden. Im Gegensatz zur Rockwellprüfung wird eine gleichseitige Diamantpyramide mit einem Öffnungswinkel von 136° unter einer festgelegten Prüfkraft in das Werkstück eingedrückt. Aus der mittels eines Messmikroskops festgestellten Länge der Diagonalen des bleibenden Eindrucks wird die Eindruckoberfläche errechnet.

Bei dem Material der zweiten Materiallage handelt es vorzugsweise sich um Keramik, Keramikverbundstoff, Cermets, Ormocer-Beschichtungen, Glas, Polymerwerkstoffe, insbesondere aus Aluminiumoxid und/oder Zirkonoxid und/oder einem hartstoffhaltigen Verbundwerkstoff.

Cermets sind Verbundstoffe aus keramischen Werkstoffen in einer metallischen Matrix. Ormocer (organic modified ceramics) sind anorganisch-organische Hybridpolymere, welche vom Fraunhofer Institut entwickelt wurden. Hartstoffe sind besonders harte Materialien mit hohem Anteil an metallischem Bindungscharakter. Es handelt sich vorwiegend um Nitride, Oxide und Carbide.

Speziell bei magnetisch-induktiven Durchflussmessgeräten sollten die für die erste und zweite Materiallage eingesetzten Materialien elektrisch-isolierend wirken also einen spezifischen elektrischen Widerstand von größer als 10⁷ Ωm, vorzugsweise größer als 10⁹ Ωm (bei 20°C) aufweisen. Bei magnetisch-induktiven Durchflussmessgeräten sind beispielsweise aufgrund ihrer zumeist geringen Leitfähigkeit Oxide und Nitride den Metallcarbiden als Hartstoffe oder Hartstoffzusätze vorzuziehen.

Im Messrohr sind Messelektroden 5 angeordnet, welchen die induzierte Spannung abgreifen. Diese Messelektroden 5 sind aus einem leitenden Material.

In einer ersten Ausführungsvariante der Messelektroden sind diese aus einem weicheren Material als die vorgenannte zweite Materiallage. Die Messelektroden 5 weisen Elektrodenköpfe 9 auf. Diese Elektrodenköpfe können vorzugsweise auswechselbar sein. So werden die Elektrodenköpfe durch das Messmedium soweit abgeschliffen, dass die abrasiven Kräfte des Messmediums durch die Materiallage gedämpft werden, bevor sie auch das Elektrodenmaterial treffen. So ist die Elektrode in einer in der zweiten Materiallage angeordneten Elektrodenbohrung vertieft vor weiterer Abrasion geschützt.

In einer zweiten Ausführungsvariante der Erfindung weisen die Messelektroden eine gleich große oder größere Härte auf als die zweite Materiallage. In diesem Fall unterliegen die Messelektroden nur einem geringen abrasiven Angriff durch das Messmedium.

Die Messelektroden sind üblicherweise aus einem chemisch beständigen Material, vorzugsweise aus einem Nickelbasiswerkstoff gefertigt und sind leitfähig, sie weisen somit einem spezifischen elektrischen Widerstand von kleiner als 10⁻⁴ Ωm (bei 20°C) auf. Als härteres Elektrodenmaterial können hierbei leitfähige Legierungen oder Verbundstoffe z.B. aus Metall mit leitfähigen Hartstoffen, vorzugsweise aus Metallcarbiden eingesetzt werden. Wolframelektroden oder Elektroden aus leitfähiger Keramik können aufgrund ihrer hohen Härte ebenfalls bevorzugt eingesetzt werden.

Die zweite Materiallage 4 ist vorzugsweise als Innenrohr ausgebildet, welches zwischen zwei Haltescheiben 6 angeordnet ist. Sie können vorzugsweise aus einem Nickelbasiswerkstoff gefertigt sein. Die Haltescheiben 6 begrenzen die Bewegung des Innenrohres in axialer Richtung zum Messrohr 1. Das Innenrohr liegt lose in dem Messrohr 1 auf und ist aus Keramik oder einem Keramikverbundstoff gefertigt. Temperaturbedingte Zugspannungen in axialer Richtung und/oder Rohrleitungskräfte wirken bei dieser Konstruktion nicht auf das Innenrohr ein. Zwischen der zweiten Materiallage und der ersten Materiallage kann beispielsweise bei der vorgenannten Ausgestaltungsvariante mit einem Innenrohr auch ein Teil des Mediums angeordnet sein, wobei dies nur von geringer messtechnischer Relevanz ist. In Fig. 1 lediglich angedeutet ist eine Möglichkeit der Festlegung der zweiten Materiallage, indem die Haltescheiben 6 zwischen einem Flansch 7 des Messrohres 1 und einem weiteren nicht dargestellten Flansch z.B. eines Prozessanschlusses klemmend oder anderweitig befestigt wird.

In einer Abwandlung zu Fig. 1 kann die erste Materiallage die Dichtfunktion zwischen dem Messmedium und den Haltescheiben übernehmen.

Für einen besonders effektiven Schutz vor mechanischen Belastungen ist die Vickershärte der zweiten Materiallage zumindest doppelt, vorzugsweise fünfmal höher als die Vickershärte der ersten Materiallage.

Die Härte der zweiten Materiallage beträgt bevorzugt mehr als 800 HV, besonders bevorzugt mehr als 1000HV bei 20°C.

Neben der erhöhten abrasiven Widerstandsfähigkeit des Messrohres wird auch die Volumenkonstanz der zweiten Materiallage verbessert. Üblicherweise besitzen viele Linermaterialien, wie z.B. PTFE eine schlechte Volumenkonstanz bei höheren Mediumsdrücken. Der Liner wird somit weggedrückt. Dies wird aber durch die zweite Materiallage verhindert, welche eine Druckverminderung auf die zweite Materiallage ermöglicht. Bei Unterdruck bzw. Vakuum kann zudem der Liner bzw. die erste Materiallage aufgrund mangelhafter chemischer Anbindung an der Messrohrwandung kollabieren. Bei dieser Anwendung zeigt die zweite Materiallage eine Stützfunktion. Die Längenausdehnungskonstante des Materials der zweiten Materiallage ist vorzugsweise kleiner als 13 ppm pro Kelvin.

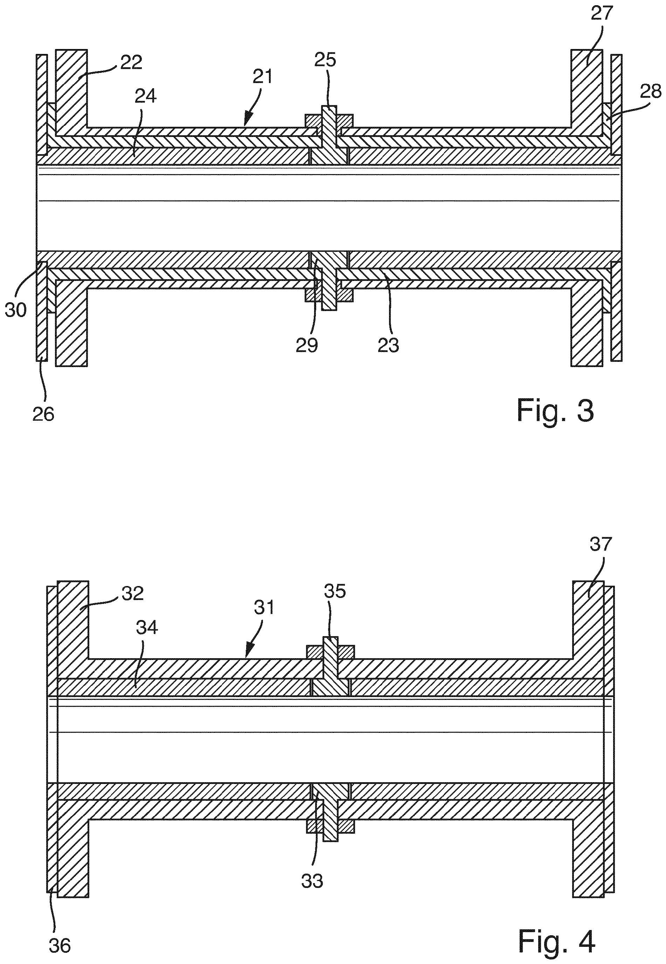

Fig. 2 und 3 zeigen Messrohre weiterer erfindungsgemäßer Durchflussmessgeräte auf. Diese sind weitere bevorzugte konstruktive Abwandlungen des Messrohres der Fig. 1. chemisch/physikalische Eigenschaften des Messrohres und der einzelnen Materiallagen sind unverändert in den weiteren Ausführungsvarianten übernommen.

In Fig. 2 ist ebenfalls ein Messrohr 11 einer zweiten Ausführungsvariante mit einem Materialaufbau analog zu Fig. 1. Das Messrohr 11 weist ein Außenrohr aus einem metallischen Stützmaterial 12 auf, sowie eine an der Innenwandung dieses Außenrohres angeordnete erste Materiallage 13 auf. Zudem ist im Messrohr 11 eine zweite Materiallage 14 angeordnet, welche die erste Materiallage vor mechanischer Beanspruchung z.B. des Messmediums schützt. Weiterhin sind in Fig. 2 Messelektroden 15 mit entsprechenden Messelektrodenköpfen 19 dargestellt, welche durch die einzelnen Materiallagen hindurchgeführt wurden. Die erste Materiallage 13 weist eine Bördelung 18 zu dessen mechanischer Anbindung an das Außenrohr auf. Die zweite Materiallage 14 wird endständig durch Haltescheiben 16 begrenzt, welche mittels Befestigungsmittel 10, in diesem Fall durch Schrauben, an dem Flansch 17 des Messrohres 11 festgelegt sind. Dies hat den Vorteil, dass die zweite Materiallage 13 nicht erst während der Fixierung am Anwendungsort installiert wird, sondern schon vormontiert im Messrohr 11 vorliegt.

Weiterhin wird die Messgenauigkeit erhöht, wenn die zweite Materiallage einen konischen Ein- und Auslauf aufweist, so dass der Innenumfang des Messrohres 11 in den endständigen Bereichen des Messrohres 11 größer ist als im mittleren Bereich.

Es ist von Vorteil, dass die zweite Materiallage im Messrohr austauschbar ist, so dass nach einer gewissen Betriebsdauer bei der Messung von abrasiven Medien nicht das gesamte Messgerät sondern nur die zweite Materiallage ausgetauscht werden muss. Hierfür genügt z.B. das einseitige Lösen einer der Halteplatten 6, 16, 26 oder 36.

Fig. 3 zeigt eine dritte Ausführungsvariante eines Messrohres 21 eines Durchflussmessgerätes. Das Messrohr 21 weist ein Außenrohr aus einem metallischen Stützmaterial 22 auf, sowie eine an der Innenwandung dieses Außenrohres angeordnete erste Materiallage 23 auf und innerhalb des Messrohres eine darauf folgende eine zweite Materiallage 24, welche die erste Materiallage vor mechanischer Beanspruchung z.B. des Messmediums schützt. Wie bei den vorhergehenden Ausführungsbeispielen ist die zweite Materiallage nicht an die erste Materiallage angebunden sondern liegt lose, ggf. mit einem geringen Abstand bzw. Bewegungsspiel zur ersten Materiallage vor. Wie in Fig. 2 sind Messelektroden 25 mit entsprechenden Messelektrodenköpfen 29 dargestellt, welche durch die einzelnen Materiallagen hindurchgeführt wurden. Die erste Materiallage 23 weist eine Bördelung 28 zu dessen mechanischer Anbindung an das Außenrohr auf. Die zweite Materiallage 24 wird endständig durch Haltescheiben 26 begrenzt. Diese können zusammen mit der Bördelung 28 zwischen dem Flansch 27 und einem weiteren nicht dargestellten Flansch einer Messleitung befestigt, beispielsweise klemmend befestigt sein.

Die zweite Materiallage erstreckt sich dabei bis zu den außenseitigen Stirnflächen der Halteplatten 26 und weist zur Aufnahme derselben eine Aussparung 30 auf. Diese Aussparung 30 stellt sich in Fig. 3 als winklige Aussparung dar in welche die Halteplatte eingesetzt ist, so dass die endständige Stirnfläche einer jeden Halteplatte 26 auf derselben Ebene verläuft wie eine endständige Stirnfläche der zweiten Materiallage 24. Dadurch schließt sich die zweite Materiallage direkt an einen Prozessanschluss oder eine Prozessleitung an.

Selbstverständlich können die in Fig. 1-3 dargestellten Ausführungsvarianten und konstruktiven Verbesserungen im Rahmen der vorliegenden Erfindung miteinander kombiniert werden.

Fig.4 zeigt eine dritte Variante eines Messrohres 31, die nicht Gegenstand der Erfindung ist. Hier wird, anstelle eines metallischen Stützmaterials und einer korrosionsschützenden Materiallage, ein Kunststoffmessrohr eingesetzt. Dieses Kunststoffmessrohr bzw. die Messrohrwandung kann bereits materialbedingt aus einen antikorrosiven und ggf. elektrisch-isolierenden Kunststoffmaterial 32 bestehen.

Dieses Messrohr kann vorzugsweise endständige Flansche 37 aufweisen oder eine sogenannte flanschlose Verbindung mit einem Prozessanschluss oder Leitungsanschluss ermöglichen. Hierfür können im Messrohr 31 integrierte oder gesondert bereitgestellte E-Muffen eingesetzt werden.

Innerhalb des Messrohres aus Kunststoffmaterial ist eine Materiallage 32 eingesetzt, welche die Messrohrwandung - wie zuvor die in Fig. 1-3 dargestellte zweite Materiallage - vor mechanischer Belastung des Messmediums, insbesondere vor Abrasion, schützt. Die entsprechenden Materialeigenschaften und Ausgestaltungsvarianten dieser Materiallage wurden bereits zuvor bei den Ausführungsvarianten der Fig. 1-3 anhand der dortigen zweiten Materiallage beschrieben.

In dem Messrohr 31 und der Materiallage 34 sind Messelektroden 35 mit entsprechenden Messelektrodenköpfen eingefügt. Das Material und die mechanische Ausgestaltung der Messelektroden sind analog zu den in Fig. 1-3 beschriebenen Messelektroden.

Als Kunststoffmaterial für das Messrohr bieten sich handelsübliches Rohrmaterial an, jedoch bevorzugt Polyethylen (PE). Auch in diesem Beispiel wird die axiale Bewegung der zweiten Materiallage 34 durch endständige Haltescheiben 36 begrenzt. Die konstruktiven vorteilhaften Abwandlungen der Messrohre der Fig. 2 und 3 können jedoch auch auf das Kunststoffmessrohr angewandt werden.

### Bezugszeichenliste

- 1: Messrohr
- 2: metallisches Stützmaterial
- 3: erste Materiallage
- 4: zweite Materiallage
- 5: Messelektroden
- 6: Haltescheibe
- 7: Flansch
- 8: Bördelung
- 9: Elektrodenkopf
- 10: Befestigungsmittel
- 11: Messrohr
- 12: metallisches Stützmaterial
- 13: erste Materiallage
- 14: zweite Materiallage
- 15: Messelektroden
- 16: Haltescheibe
- 17: Flansch
- 18: Bördelung
- 19: Elektrodenkopf
- 20: Konische Einlaufstrecke
- 21: Messrohr
- 22: metallisches Stützmaterial
- 23: erste Materiallage
- 24: zweite Materiallage
- 25: Messelektroden
- 26: Haltescheibe
- 27: Flansch
- 28: Bördelung
- 29: Elektrodenkopf
- 30: Ausnehmung
- 31: Messrohr
- 32: Kunststoffmaterial
- 33: Elektrodenkopf
- 34: Materiallage
- 35: Messelektroden
- 36: Haltescheibe
- 37: Flansch

## Patentansprüche

1. Durchflussmessgerät umfassend ein Messrohr (1, 11, 21) mit einer Sensoranordnung und eine Auswerteeinheit zur Ermittlung einer Durchflussgeschwindigkeit, eines Volumendurchflusses und/oder eines Massendurchflusses,
wobei die Sensoranordnung an oder in einem Messrohr angeordnet ist, wobei das Messrohr umfasst:
eine Messrohrwandung aus einem metallischen Stützmaterial (2, 12, 22) und
eine erste Materiallage (3, 13, 23) zum Schutz des metallischen Stützmaterials vor korrosiven Messmedien, welche an einer Innenmantelfläche der Messrohrwandung angebracht ist,
wobei die erste Materiallage aus einem Kunststoffmaterial auf Basis eines polyfluorierten Polymers und/oder eines natürlichen oder synthetischen Kautschuks besteht;
**dadurch gekennzeichnet,**
**dass** im Messrohr an der mediumszugewandten Seite der ersten Materiallage
eine zweite Materiallage (4, 14, 24) angeordnet ist, zur Verminderung der mechanischen Belastung,
wobei die zweite Materiallage eine größere Härte aufweist als die erste Materiallage,
wobei die zweite Materiallage als ein Keramikrohr ausgebildet ist, welches lose im Messrohr angeordnet ist,
wobei die zweite Materiallage austauschbar ist,
wobei die erste Materiallage keine adhäsive Bindung zum metallischen Stützmaterial aufweist und
**dass** die zweite Materiallage so ausgebildet ist, dass sie die erste Materiallage bei Unterdruck im Messrohr abstützt.

2. Durchflussmessgerät nach Anspruch 1, **dadurch gekennzeichnet, dass** die Vickershärte der zweiten Materiallage zumindest doppelt, vorzugsweise fünfmal höher ist als die Vickershärte der ersten Materiallage.

3. Durchflussmessgerät nach einem der vorhergehenden Ansprüche, **dadurch gekennzeichnet, dass** die zweite Materiallage gegen Verrutschen entlang einer Messrohrachse im Messrohr mittels Haltescheiben (6, 16, 26) gesichert werden, welche endständig am Messrohr angeordnet sind.

4. Durchflussmessgerät nach Anspruch 3, **dadurch gekennzeichnet, dass** die Haltescheiben aus einem korrosionsbeständigen Nickelwerkstoff bestehen.

5. Durchflussmessgerät nach Anspruch 3 oder 4, **dadurch gekennzeichnet, dass** die zweite Materiallage endständige Ausnehmungen aufweisen, gegen welche die Haltescheiben gepresst werden können, wobei die Ausnehmungen derart ausgebildet sind, dass die Haltescheiben randseitig in Richtung des Messmediums von der zweiten Materiallage bedeckt ist.

6. Durchflussmessgerät nach einem der vorhergehenden Ansprüche, **dadurch gekennzeichnet, dass** die zweite Materiallage endständig konisch ausgebildet ist, derart, dass Innendurchmesser in einem Mittelbereich des Messrohres geringer ist als der Innendurchmesser in einem Endbereich des Messrohres.

7. Durchflussmessgerät nach einem der vorhergehenden Ansprüche, **dadurch gekennzeichnet, dass** das Durchflussmessgerät ein magnetisch-induktives Messgerät ist, umfassend ein Magnetsystem zum Aufbau eines Magnetfeldes, welches das im Messrohr befindliche Messmedium durchsetzt, und umfassend zumindest zwei Messelektroden (5, 15, 25) zum Abgriff einer durch die Bewegung des Messmediums induzierten Spannung, wobei die erste und die zweite Materiallage jeweils aus elektrisch-isolierendem Material bestehen und wobei in den jeweiligen Materiallagen Öffnungen für die Messelektroden vorgesehen sind.

8. Durchflussmessgerät nach Anspruch 7, **dadurch gekennzeichnet, dass** die Messelektroden Elektrodenköpfe (9, 19, 29) aufweisen, wobei zumindest die Elektrodenköpfe aus einem Material bestehen, welches zumindest die gleiche Härte oder eine größere Härte aufweist als die zweite Materiallage.

9. Durchflussmessgerät nach Anspruch 7 oder 8, **dadurch gekennzeichnet, dass** die Messelektroden Elektrodenköpfe aufweisen, welche demontierbar sind.

## Claims

1. Flowmeter comprising a measuring tube (1, 11, 21) with a sensor arrangement and an evaluation unit designed to determine a flow velocity, a volume flow and/or a mass flow,
wherein the sensor arrangement is arranged on or in a measuring tube,
wherein the measuring tube comprises:
a measuring tube wall consisting of a metal support material (2, 12, 22) and a first material layer (3, 13, 23) designed to protect the metal support material against corrosive media to be measured, wherein said layer is applied on an inner lateral surface of the measuring tube wall,
wherein the first material layer is made from a plastic material based on a polyfluorinated polymer and/or a natural or synthetic rubber;
**characterized in that**
a second material layer (4, 14, 24) to reduce mechanical stress is provided in the measuring tube on the side of the first material layer facing towards the medium, wherein the second material layer has a hardness that is greater than the first material layer,
wherein the second material layer is designed as a ceramic tube, which is arranged loosely in the measuring tube,
wherein the second material layer is replaceable,
wherein the first material layer does not have an adhesive connection to the metal support material and
**in that** the second material layer is designed in such a way that it supports the first material layer in the event of a negative pressure in the measuring tube.

2. Flowmeter as claimed in Claim 1, **characterized in that** the Vickers hardness of the second material layer is at least two times, and preferably five times, higher than the Vickers hardness of the first material layer.

3. Flowmeter as claimed in one of the previous claims, **characterized in that** the second material layer is protected against slipping along a measuring tube axis in the measuring tube by holding disks (6, 16, 26) which are arranged at the end of the measuring tube.

4. Flowmeter as claimed in Claim 3, **characterized in that** the holding disks are made from a corrosion-resistant nickel.

5. Flowmeter as claimed in Claim 3 or 4, **characterized in that** the second material layer has recesses at the end against which the holding disks can be pressed, wherein the recesses are designed in such a way that the holding disks are covered by the second material layer at the edge in the direction of the medium to be measured.

6. Flowmeter as claimed in one of the previous claims, **characterized in that** the second material layer is formed in a conical manner at the end in such a way that the interior diameter in a central section of the measuring tube is less than the inner diameter in an end section of the measuring tube.

7. Flowmeter as claimed in one of the previous claims, **characterized in that** the flowmeter is an electromagnetic measuring device, consisting of a magnetic system designed to generate a magnetic field which passes through the medium to be measured which is located in the measuring tube,
and comprising at least two measuring electrodes (5, 15, 25) which are designed to measure a voltage induced by the movement of the medium to be measured, wherein the first and the second material layer are made from an electrically isolating material and wherein openings for the measuring electrodes are provided in the individual material layers.

8. Flowmeter as claimed in Claim 7, **characterized in that** the measuring electrodes have electrode heads (9, 19, 29), wherein at least the electrode heads are made from a material which has at least the same hardness or a greater hardness than the second material layer.

9. Flowmeter as claimed in Claim 7 or 8, **characterized in that** the measuring electrodes have electrode heads which can be disassembled.

## Revendications

1. Débitmètre comprenant un tube de mesure (1, 11, 21) avec un agencement de capteurs et une unité d'exploitation destinée à la détermination d'une vitesse d'écoulement, d'un débit volumique et/ou d'un débit massique,
l'agencement de capteurs étant disposé sur ou dans le tube de mesure,
le tube de mesure comprenant :
une paroi de tube de mesure constituée d'un matériau support métallique (2, 12, 22) et une première couche de matériau (3, 13, 23) destinée à la protection du matériau support métallique contre les produits de mesure corrosifs, laquelle couche est appliquée sur une surface latérale intérieure de la paroi de tube de mesure,
la première couche de matériau étant constituée d'une matière plastique basée sur un polymère polyfluoré et/ou un caoutchouc naturel ou synthétique ;
**caractérisé**
**en ce qu'**est disposée, dans le tube de mesure, sur le côté de la première couche de matériau faisant face au produit, une deuxième couche de matériau (4, 14, 24) destinée à la réduction de la charge mécanique,
la deuxième couche de matériau présentant une dureté mécanique supérieure à celle de la première couche de matériau,
la deuxième couche de matériau étant conçue en tant que tube céramique, lequel est disposé librement dans le tube de mesure,
la deuxième couche de matériau étant interchangeable,
la première couche de matériau ne présentant pas de liaison adhésive avec le matériau support métallique et
**en ce que** la deuxième couche de matériau est formée de telle sorte à étayer la deuxième couche de mesure en cas de dépression dans le tube de mesure.

2. Débitmètre selon la revendication 1, **caractérisé en ce que** la dureté Vickers de la deuxième couche de matériau est au moins deux fois, de préférence cinq fois supérieure à la dureté Vickers de la première couche de matériau.

3. Débitmètre selon l'une des revendications précédentes, **caractérisé en ce que** la deuxième couche de matériau est protégée contre tout déplacement le long d'un axe de tube de mesure à l'intérieur du tube de mesure au moyen de disques de maintien (6, 16, 26), lesquels sont disposés à l'extrémité du tube de mesure.

4. Débitmètre selon la revendication 3, **caractérisé en ce que** les disques de maintien sont constitués de nickel résistant à la corrosion.

5. Débitmètre selon la revendication 3 ou 4, **caractérisé en ce que** la deuxième couche de matériau présente en son extrémité des évidements contre lesquels les disques de maintien peuvent être pressés, les évidements étant formés de telle sorte que les disques de maintien sont recouverts, au niveau de leurs bords et en direction du produit mesuré, par la deuxième couche de matériau.

6. Débitmètre selon l'une des revendications précédentes, **caractérisé en ce que** la deuxième couche de matériau est formée en son extrémité de façon conique, de telle sorte que le diamètre intérieur dans une zone centrale du tube de mesure est inférieur au diamètre intérieur dans une zone d'extrémité du tube de mesure.

7. Débitmètre selon l'une des revendications précédentes, **caractérisé en ce que** le débitmètre est un appareil de mesure magnéto-inductif, comprenant un système magnétique destiné à créer un champ magnétique qui traverse le produit mesuré se trouvant dans le tube de mesure,
et comprenant au moins deux électrodes de mesure (5, 15, 25) destinées au prélèvement d'une tension induite par le mouvement du produit mesuré, la première et la deuxième couche de matériau étant constituées d'un matériau électriquement isolant et des ouvertures étant prévues pour les électrodes de mesure dans les couches de matériau respectives.

8. Débitmètre selon la revendication 7, **caractérisé en ce que** les électrodes de mesure comportent des têtes d'électrode (9, 19, 29), au moins les têtes d'électrode étant constituées d'un matériau qui présente au moins la même dureté ou une dureté supérieure à celle de la deuxième couche de matériau.

9. Débitmètre selon la revendication 7 ou 8, **caractérisé en ce que** les électrodes de mesure présentent des têtes d'électrode qui sont démontables.
